# EUROPEAN PATENT APPLICATION

(11) **EP 4 629 072 A1**
(43) Date of publication of application: **08.10.2025**
(21) Application number: 25166548.5
(22) Date of filing: 27.03.2025
(51) Int. Cl.: G06F 9/455, G06F 9/50

(54) **INFORMATION RESTORATION METHOD AND RELATED DEVICE**

(30) Priority: 30.03.2024 CN 202410381724
(71) Applicant: Huawei Technologies Co., Ltd., Shenzhen, Guangdong 518129 (CN)
(72) Inventor: ZHANG, Tao, Shenzhen, 518129 (CN); WANG, Qian, Shenzhen, 518129 (CN); ZHU, Jinyu, Shenzhen, 518129 (CN); ZHENG, Yunzhou, Shenzhen, 518129 (CN); CHEN, Xiao, Shenzhen, 518129 (CN)
(74) Representative: Gill Jennings & Every LLP

(57) **Abstract**

This application relates to the field of communication technologies, and provides an information restoration method and a related device, to adaptively adjust a manner of restoring a container. In the method, a destination server receives first memory data of a first container, where the first memory data includes a first virtual memory address VMA list. The destination server creates a second VMA list in memory data of a second container based on the first VMA list, where content of the second VMA list is the same as content of the first VMA list. The destination server restores the first container to the second container based on the first memory data and a relationship between the second VMA list and a third VMA list, where the third VMA list is carried in memory data that is of the first container and that is received at an adjacent previous time.

## Description

### TECHNICAL FIELD

Embodiments of this application relate to the field of communication technologies, and in particular, to an information restoration method and a related device.

### BACKGROUND

With development of cloud native technologies, a container is not only a stateless microservice container, but also a container that can execute services such as databases. During upgrading, maintenance, and load balancing of a current server, the server needs to be restarted. Container information of the server needs to be migrated to another server through container migration. In addition, when server resource allocation is unbalanced, a resource ratio may also be adjusted through the container migration to ensure resource balancing. In a container migration process, a source server serves as a transmitting end of container information that needs to be migrated, and a destination server serves as a receiving end of the container information that needs to be migrated. In the destination server, container information of the destination server needs to be restored based on the received container information.

Because new information is generated in a container of the source server in the migration process, the destination server may migrate container information for a plurality of times, in other words, obtain the container information from the source server for a plurality of times, and then restore a container of the destination server based on the container information. When relationships between container information obtained at different moments are different, the destination server cannot adjust a manner of restoring the container. As a result, a container restoration manner used by the destination server may not match a relationship between the container information obtained at different moments, and a container migration effect is reduced.

Therefore, how the destination server adaptively adjusts a manner of restoring a container is a technical problem to be urgently resolved.

### SUMMARY

Embodiments of this application provide an information restoration method and a related device, to adaptively adjust a manner of restoring a container, so as to improve a container migration effect.

A first aspect of this application provides an information restoration method. The method is performed by a destination server, or the method is performed by some components (such as a processor, a chip, or a chip system) in the destination server, or the method may be implemented by a logical module or software that can implement all or some functions of the destination server. In the first aspect and possible implementations of the first aspect, an example in which the information restoration method is performed by the destination server is used for description. The destination server receives first memory data of a first container, where the first memory data includes a first virtual memory address (VMA) list. The destination server creates a second VMA list in memory data of a second container based on the first VMA list, where content of the second VMA list is the same as content of the first VMA list. The destination server restores the first container to the second container based on the first memory data and a relationship between the second VMA list and a third VMA list, where the third VMA list is carried in memory data that is of the first container and that is received at an adjacent previous time.

Based on the foregoing technical solution, when the source server is upgraded and maintained or in another case, a container in the source server cannot normally run a related process. In this case, to avoid process interruption, information such as memory data of the container in the source server needs to be migrated to the destination server, so that the destination server can run the process. Because the source server continuously generates new memory data, container migration needs to be performed for a plurality of times. In this solution, in a current migration process, the destination server receives memory data. For example, the memory data may be memory data of a container that needs to be migrated in the source server, that is, memory data of a source container, where the memory data includes a VMA list 1 in current container migration. The destination server creates a VMA list 2 whose content is the same as that of the VMA list 1 in memory data of a destination container. In an adjacent previous container migration process of the current migration, the destination server also receives the memory data, where the memory data includes a VMA list 3. In this case, the destination server may adaptively adjust, based on a relationship between the VMA list 2 and the VMA list 3, a manner of restoring the source container to the destination container, and a process of restoring the source container to the destination container is an important process of container migration. Therefore, this solution may avoid a case in which time for a container restoration process is excessively long due to an inappropriate container restoration manner, to increase a container migration speed. For example, a relationship between current memory data and previously obtained memory data can be determined depending on whether the VMA list 1 has an intersection set with the VMA list 2, for example, whether the current memory data is a memory dirty page relative to the previously obtained memory data. Based on the relationship between the current memory data and the previously obtained memory data, an appropriate manner used for current memory data restoration may be quickly determined, so that time used for memory data restoration may be reduced. The memory data restoration is an important process of container restoration, and is also an important process of container migration. Therefore, container migration time is also reduced.

In a specific design, the source server and the destination server may be virtual servers or physical servers.

In a specific design, the first VMA list indicates a mapping relationship between the first memory data and a physical memory of the first container.

In a specific design, the first VMA list and a VMA in the first VMA list include: a private file mapping VMA or an anonymous private VMA.

In a specific design, processes in which the destination server receives the first memory data of the first container, creates the second VMA list, and restores the first container to the second container, and another process constitute current container migration. In a more specific design, the current container migration includes: The source server copies (dumps) container information to an image file, where the container information includes the first memory data and first process number information. The source server sends the image file to the destination server, and correspondingly, the destination server receives the image file. In this case, because the image file includes the first memory data, the destination server also receives the first memory data. The destination server creates the second VMA list in the second container based on the first VMA list in the first memory data. The destination server restores the first container to the second container based on the first memory data and the relationship between the second VMA list and the third VMA list.

In a specific design, the source server may send the image file to the destination server in a shared storage manner.

In a specific design, the plurality of times of container migration are sorted based on a time sequence of occurrence of the container migration, and an adjacent previous time of container migration is container migration whose occurrence moment is before the current container migration and is closest to the current container migration. For example, based on the time sequence, in the plurality of times of container migration, if the current container migration is a 3^{rd} time of container migration, the adjacent previous time of container migration is a 2^{nd} time of container migration.

In a specific design, a procedure of the adjacent previous time of container migration is the same as a procedure of the current container migration, but to-be-migrated container information is different. Container information of the adjacent previous time of container migration includes memory data and second process number information. The container information of the adjacent previous time of container migration is container information of the first container at a moment at which a previous time of dumping is performed, and correspondingly, memory data received by the destination server at the adjacent previous time is memory data of the first container at the moment at which the previous time of dumping is performed. Container information of the current container migration is container information of the first container at a moment at which current dumping is performed, and memory data currently received by the destination server is memory data of the first container at the moment at which the current dumping is performed.

In a specific design, the container migration may be classified into full migration and incremental migration. When container migration is performed for a 1^{st} time in the plurality of times of container migration, full migration may be performed, to be specific, all container information of the first container of the source server at a dumping moment is migrated to the destination server. In a specific design, the adjacent previous time of container migration may be full migration. After the 1^{st} time of migration, incremental migration may be performed, to be specific, added container information at a current dumping moment in comparison with that at a previous dumping moment is migrated. In a specific design, the current container migration may be incremental migration. In a specific design, the adjacent previous time of container migration may also be incremental migration.

In a specific design, the destination server creates the second VMA list in the memory data of the second container based on the first VMA list by using a memory remapping (memory mapping, mmap) function.

In a specific design, in a process of the adjacent previous time of container migration, the destination server receives the memory data, where the memory data includes the third VMA list. The destination server creates a fourth VMA list based on the third VMA list. In a more specific design, the destination server may alternatively restore the first container to the second container based on the first memory data and a relationship between the second VMA list and the fourth VMA list.

In a specific design, the first VMA list and a VMA in the first VMA list include: a private file mapping VMA or an anonymous private VMA.

In a possible implementation of the first aspect, the destination server restores the first container to the second container based on the first memory data and depending on whether the second VMA list has an intersection set with the third VMA list.

Based on the foregoing technical solution, the destination server may quickly determine, depending on whether the second VMA list has an intersection set with the third VMA list, a manner suitable for restoring the first container to the second container, and select an appropriate restoration manner to shorten time used for container restoration. For example, the destination server may determine, depending on whether the second VMA list has an intersection set with the third VMA list, whether the first memory data is a memory dirty page. If the first memory data is the memory dirty page, a corresponding restoration manner is to copy the memory dirty page to the second container. If the first memory data is not the memory dirty page, a corresponding restoration manner is to reuse the memory data in the adjacent previous time of container migration. In this case, the memory data in the previous time of container migration does not need to be copied to the second container, to reduce time used for the container restoration.

In a specific design, the destination server restores process number information of the second container based on a relationship between the first process number information and the second process number information.

In a specific design, the destination server determines newly added process number information, reduced process number information, and unchanged process number information in the first process number information in comparison with that in the second process number information. For the newly added process number information, the process number information is copied. For the reduced process number information, that is, process number information that exists in the second process number information but does not exist in the first process number information, the process number information is deleted. For the unchanged process number information, process number information that is in the second process number information and that is the same as that in the first process number information is retained.

In a possible implementation of the first aspect, when the second VMA list includes a first VMA, and the first VMA has no intersection set with the third VMA list, the destination server copies the second memory data to the memory data corresponding to the second container, where the second memory data is memory data that is in the first memory data and that corresponds to the first VMA.

In the foregoing technical solution, the first VMA is used as an example herein. In this solution, all VMAs that are in the second VMA list and that have no intersection set with any VMA in the third VMA list may be searched for, to quickly locate memory data that is a memory dirty page, and copy the memory dirty page to restore the memory data. Locating the memory dirty page is an important component of the incremental migration in the container migration. This solution shortens time for locating the memory dirty page in the memory data, and also shortens time for the container migration to some extent.

In a specific design, the destination server may traverse the third VMA list by using the first VMA as a baseline, to determine whether a VMA that is the same as the first VMA exists in the third VMA list. When the VMA that is the same as the first VMA does not exist, the destination server may determine that the first memory data is the memory dirty page.

In a possible implementation of the first aspect, when the third VMA list includes a second VMA, and the second VMA has no intersection set with the first VMA list, the destination server releases the second VMA.

Based on the foregoing technical solution, in comparison with a solution of determining, based on process related information, whether the memory data needs to be released, in this solution, whether the second VMA needs to be released can be quickly determined based on a relationship between the second VMA and the second VMA list. When the VMA is released, corresponding memory data is also released. In this manner, the VMA that needs to be released can be quickly found, to release memory data that is not currently required. For example, the released memory data may be memory data that is not currently received but is received at a previous time, and this type of memory data is the memory data that is not currently required.

In a specific design, the destination server may traverse both the second VMA list and the third VMA list, to determine a VMA corresponding to memory data that is a memory increment in the second VMA list and a VMA that needs to be released in the third VMA list.

In a specific design, the destination server may release a third VMA by using an munmap function.

In a possible implementation of the first aspect, when the second VMA list includes the third VMA, and the third VMA has an intersection set with the third VMA list, the destination server establishes a mapping relationship between physical page information corresponding to the intersection set and the third VMA, where the physical page information is carried in the memory data that is of the first container and that is received at the adjacent previous time.

Based on the foregoing technical solution, when the first VMA includes the second VMA, in this solution, a relationship between previously obtained memory data and current memory data may be established by pre-mapping physical page information, that is, pre-mapping previously obtained physical page information. In other words, an index of the previously obtained memory data is currently established. Because the previously obtained memory data already exists in the destination server, the destination server may currently invoke the previously obtained memory data by establishing the index.

In a specific design, the physical page information includes a mark, where the mark indicates whether the memory data corresponding to the VMA changes, and the destination server may further determine, based on the mark, whether the first memory data is the memory dirty page.

In a specific design, that the third VMA has an intersection set with the third VMA list includes: A fourth VMA in the third VMA list is completely the same as the third VMA. A case in which the fourth VMA is completely the same as the third VMA includes: The first VMA is a VMA that currently remains unchanged compared with the previous time, that is, a same VMA is used currently and at the previous time, or a VMA on which the source server performs mmap in an original virtual address range by using a memory unmapping (munmap) function, that is, the fourth VMA and the third VMA share a same virtual address range. **In** a specific design, the destination server may pre-map the physical page information to the first VMA in an mremap manner, that is, establish a mapping relationship between the physical page information and the first VMA.

In a possible implementation of the first aspect, the destination server determines, based on the physical page information, whether third memory data is a memory dirty page, where the third memory data is memory data that is in the first memory data and that corresponds to the third VMA. When the third memory data is the memory dirty page, the destination server copies the third memory data to the memory data corresponding to the second container.

Based on the foregoing technical solution, when the third VMA has an intersection set with the third VMA list, in this solution, based on VMA information, whether the memory data changes is further determined based on the physical page information, to determine whether the first memory data is the memory dirty page. This solution is applicable to a case in which a VMA part that is an intersection set remains unchanged, that is, a mapping relationship between the VMA part and a virtual memory remains unchanged, but stored memory data may change, to improve accuracy of determining the memory dirty page, and avoid a case in which the memory dirty page generated by the first container in the container migration process is not migrated to the second container.

In a specific design, the destination server may first establish a relationship between physical page information and the third VMA, and then determine, based on the physical page information, that the first memory data is the memory dirty page. Alternatively, the destination server may first determine, based on the physical page information, whether the first memory data is the memory dirty page and memory data that is in memory data included in the first memory data and that is the same as current memory data, and then establish a mapping relationship between physical page information corresponding to the same memory data and the third VMA.

A second aspect of this application provides an information processing method. The method is performed by a source server, or the method is performed by some components (such as a processor, a chip, or a chip system) in the source server, or the method may be implemented by a logical module or software that can implement all or some functions of the source server. In the second aspect and possible implementations of the second aspect, an example in which the information restoration method is performed by the source server is used for description. The source server obtains first memory data of a first container. The source server determines, based on the first memory data, whether a first condition is met, where the first condition includes a total migration duration constraint, a dirty page rate constraint, or a stop duration constraint. When the first condition is met, the source server obtains second memory data of the first container. The source server copies the second memory data, and sends the copied second memory data to a destination server, where the second memory data includes a first VMA list, a first process is in a stop state in the copying process and the sending process, and the first process is a process in which the first memory data is generated.

In the foregoing technical solution, the first condition is introduced, and whether the first condition is met is determined based on the first memory data. Last container migration is performed only when the condition is met, that is, the second memory data is migrated. In a last container migration process, the process is in the stop state. There is an associative relationship between a moment at which the last container migration is started and total migration duration. For example, when the moment at which the last container migration is started is earlier, a quantity of times of the container migration is smaller, and correspondingly, the total migration duration is shorter. Therefore, the total migration duration of the container migration process may be controlled by controlling the moment at which the last container migration is performed. When the moment at which the last container migration is started is earlier, a dirty page rate of the memory data is higher because a quantity of container information iterations is smaller. It can be learned that the dirty page rate may be controlled by controlling the moment at which the last container migration is performed. When the moment at which the last container migration is started is earlier, a quantity of container information iterations is smaller, and a size of the memory dirty page of the memory data is larger. Correspondingly, in the last migration process, a time for restoring the memory dirty page is longer, and a stop moment is equal to a moment at which the last migration is performed. Therefore, the stop moment may be controlled by controlling the moment at which the last container migration is performed. In this solution, a constraint condition, namely, the first condition is introduced to control the moment at which the last container migration is started, to control the total migration duration, the dirty page rate, and stop duration, so as to avoid problems such as excessively long total migration duration, an excessively high dirty page rate, and excessively long stop duration, and optimize user experience in the container migration process.

In a specific design, the first condition may be configured by default at delivery, or may be set by a user based on a requirement. For example, constraints that may be set by the user include: The total migration duration is less than 1s, the dirty page rate is less than 2%, and the stop duration is less than 0.5s.

In a possible implementation of the second aspect, the source server obtains third memory data of the first container at a current moment. That the source server determines, based on the first memory data, whether a first condition is met includes: The source server determines, based on a relationship between the first memory data and the third memory data, whether the first condition is met.

In a possible implementation of the second aspect, the source server determines a memory dirty page of the third memory data relative to the first memory data; and the source server determines, based on the memory dirty page, whether the first condition is met.

Based on the foregoing technical solution, an increment of the memory data, that is, the memory dirty page, may be obtained by determining the memory dirty page of the third memory data relative to the first memory data. Migration time, stop time, or the like that needs to be spent in the last container migration may be predicted based on the memory dirty page. The last migration refers to container migration that needs to be frozen in the process. Whether the first condition is met may be determined based on the prediction, to determine whether the current moment is suitable for performing the last migration.

In a possible implementation of the second aspect, the first condition is the total migration duration constraint, and the source server determines, based on the size of the memory dirty page, first duration that needs to be consumed for migrating the memory dirty page; the source server uses a sum of second duration and the first duration as first total migration duration, where the second duration is duration that has been consumed for migrating information in the first container to the second container; and the source server determines whether the first total migration duration meets the total migration duration constraint.

Based on the foregoing technical solution, the source server uses predicted duration that needs to be consumed for migrating the memory dirty page and the duration that has been consumed for the container migration as the first total migration duration, and determines whether the first total migration duration meets the total migration duration constraint. Therefore, when a requirement of a user is that the total migration duration cannot be excessively long, the last container migration may be started in time when the migration duration approaches the total migration duration constraint that is set by the user, to ensure that the total migration duration is controllable.

In a possible implementation of the second aspect, the first condition is the stop duration constraint, and the source server determines, based on the size of the memory dirty page, first duration that needs to be consumed for migrating the memory dirty page; the source server uses the first duration as first stop duration; and the source server determines whether the first stop duration meets the stop duration constraint.

Based on the foregoing technical solution, the source server uses predicted duration that needs to be consumed for migrating the memory dirty page as the stop duration, to estimate the stop duration. Therefore, when a requirement of a user is that the stop duration cannot be excessively long, the last container migration may be started only when the stop duration approaches the stop duration constraint that is set by the user. This can avoid a problem of excessively long stop duration caused by an excessively large memory dirty page in the last migration, shorten the stop duration, and improve user experience.

In a specific design, the source server receives the third memory data, and restores the second container based on the third memory data. In this restoration process, the second container is in a suspended state.

In a specific design, after the source server completes restoring the second container based on the third memory data, the source server may start a process of the second container.

A third aspect of this application provides an information processing system. The method includes a source server and a destination server. The source server may perform the method in any one of the second aspect and the possible implementations or designs of the second aspect, and the destination server may perform the method in any one of the first aspect and the possible implementations or designs of the first aspect. When the source server performs the method in the second aspect, the source server may send second memory data to the destination server. Correspondingly, the destination server receives the second memory data. The destination server creates a second VMA list in memory data of a second container based on a first VMA list, where content of the second VMA list is the same as content of the first VMA list. The destination server restores a first container to the second container based on the second memory data and a relationship between the second VMA list and a third VMA list, where the third VMA list is carried in memory data that is of the first container and that is received at an adjacent previous time.

A fourth aspect of this application provides a communication apparatus. The communication apparatus includes a transceiver unit and a processing unit, configured to perform all or some operations in the method in the first aspect or the second aspect. The communication apparatus may be a terminal device like a computer, or may be some components, such as a line card or an interface board, configured to perform a related operation in the terminal device, or may be a chip system configured to perform a related operation. The chip system may include one or more chips. When the communication apparatus is the chip system, the transceiver unit and the processing unit may be, for example, an interface circuit of a chip, and the processing unit may be, for example, a processing circuit of the chip.

For example, when the method in the first aspect is performed, the transceiver unit is configured to receive first memory data of a first container, where the first memory data includes a first virtual memory address VMA list; and the destination server creates a second VMA list in memory data of a second container based on the first VMA list, where content of the second VMA list is the same as content of the first VMA list. The processing unit is configured to restore the first container to the second container based on the first memory data and a relationship between the second VMA list and a third VMA list, where the third VMA list is carried in memory data that is of the first container and that is received at an adjacent previous time.

In a possible implementation of the fourth aspect, the processing unit is specifically configured to restore the first container to the second container by the destination server based on the first memory data and depending on whether the second VMA list has an intersection set with the third VMA list.

In a possible implementation of the fourth aspect, the processing unit is specifically configured to: when the second VMA list includes a first VMA, and the first VMA has no intersection set with the third VMA list, copy second memory data to memory data corresponding to the second container, where the second memory data is memory data that is in the first memory data and that corresponds to the first VMA.

In a possible implementation of the fourth aspect, the processing unit is specifically configured to: when the third VMA list includes a second VMA, and the second VMA has no intersection set with the first VMA list, release the second VMA.

In a possible implementation of the fourth aspect, the processing unit is specifically configured to: when the second VMA list includes the third VMA, and the third VMA has an intersection set with the third VMA list, establish a mapping relationship between physical page information corresponding to the intersection set and the third VMA, where the physical page information is carried in the memory data that is of the first container and that is received at an adjacent previous time.

In a possible implementation of the fourth aspect, the processing unit is specifically configured to: determine whether third memory data is the memory dirty page based on the physical page information, where the third memory data is memory data that is in the first memory data and that corresponds to the third VMA; and when the third memory data is the memory dirty page, copy the third memory data to the memory data corresponding to the second container.

For example, when the method in the second aspect is performed, the transceiver unit is configured to obtain first memory data of a first container. The processing unit is configured to determine, based on the first memory data, whether a first condition is met, where the first condition includes a total migration duration constraint, a dirty page rate constraint, or a stop duration constraint. When the first condition is met, the transceiver unit is further configured to obtain the second memory data of the first container. The processing unit is further configured to copy the second memory data, and send the copied second memory data to the destination server, where the second memory data includes the first VMA list, a first process is in a stop state in the copying process and the sending process, and the first process is a process in which the first memory data is generated.

In a possible implementation of the fourth aspect, the transceiver unit is further configured to: obtain third memory data of the first container at a current moment; and invoke the processing unit to determine, based on a relationship between the first memory data and the third memory data, whether the first condition is met.

In a possible implementation of the fourth aspect, the processing unit is further configured to: determine a memory dirty page of the third memory data relative to the first memory data; and determine, based on the memory dirty page, whether the first condition is met.

A fifth aspect of this application provides a communication apparatus, including a processor and a communication interface. The communication interface is configured to receive or send an external communication signal, and send the received communication signal to the processor. The processor is configured to perform the method in any one of the first aspect or the second aspect and the possible implementations or designs of the first aspect or the second aspect.

In a specific design, the processor is coupled to a memory. For example, the memory is configured to store a program or instructions. The at least one processor is configured to execute the program or the instructions, so that the apparatus implements all or some operations of the method in any one of the first aspect or the second aspect and the possible implementations of the first aspect or the second aspect.

A sixth aspect of this application provides a computer-readable storage medium, where the medium stores a program or instructions, and when the program or the instructions are run on a processor, the method in any one of the first aspect or the second aspect and the possible implementations of the first aspect or the second aspect is performed.

A seventh aspect of this application provides a computer program product, including a program or instructions. When the program or the instructions are run on a processor, all or some operations of the method in any one of the first aspect or the second aspect and the possible implementations of the first aspect or the second aspect are implemented.

In a specific implementation, the computer program product may be the computer-readable storage medium mentioned in the fourth aspect.

An eighth aspect of this application provides a chip system. The chip system includes at least one processor, configured to support all or some functions of the communication apparatus according to the method in any one of the first aspect or the second aspect and the possible implementations or designs of the first aspect or the second aspect.

For technical effects brought by any design of the third aspect to the eighth aspect, refer to the technical effects brought by the first aspect or the second aspect and any possible implementations or designs of the first aspect or the second aspect. Details are not described herein again.

### BRIEF DESCRIPTION OF DRAWINGS

FIG. 1 is a diagram of a system architecture according to an embodiment of this application;
FIG. 2 is a diagram of a container cluster management platform according to an embodiment of this application;
FIG. 3 is a schematic flowchart of a method 100 according to an embodiment of this application;
FIG. 4 is a diagram of VMA information according to an embodiment of this application;
FIG. 5 is a diagram of an execution process of container migration according to an embodiment of this application;
FIG. 6 is a diagram of full migration and incremental migration in container migration according to an embodiment of this application;
FIG. 7 is a schematic flowchart of a method 100 according to an embodiment of this application;
FIG. 8 is a diagram of a state of a third server during container migration according to an embodiment of this application;
FIG. 9 is a diagram of a state of a destination server during container migration according to an embodiment of this application;
FIG. 10 is a schematic flowchart of Embodiment 1;
FIG. 11 is a schematic flowchart of Embodiment 2;
FIG. 12 is a diagram of a structure of a communication apparatus according to an embodiment of this application; and
FIG. 13 is a diagram of another structure of a communication apparatus according to an embodiment of this application.

### DESCRIPTION OF EMBODIMENTS

To make objectives, the technical solutions, and advantages of embodiments of this application clearer, the following further describes implementations of embodiments of this application in detail with reference to the accompanying drawings.

The following describes some terms in embodiments of this application.
(1) A containerization technology is a technology of packaging application software code and required components, such as libraries, frameworks, and other dependencies, to make the application software code and the required components be isolated in respective containers. A container may isolate application software in the container from a surrounding computing environment or infrastructure for carrying the container. Therefore, development and application software may run in any environment and infrastructure based on the containerization technology. The containerization technology can be used to create a new and scalable cloud native application program and reconstruct a conventional system.
(2) Container migration is also referred to as container migration, dynamic migration, or real-time migration, that is, storage or restoration of a program or a virtual machine. Usually, a running state of the entire virtual machine is completely stored, and can be quickly restored to an original hardware platform or even different hardware platforms.
(3) Dumping is also referred to as copying, replication, or persistence. Dumping is a snapshot of a process or a system at specified time. A file obtained through dumping includes data such as process number information of a running program and memory data. In this solution, copying is for representing dumping.

The following describes, by using an example, a system architecture on which embodiments of this application are based.

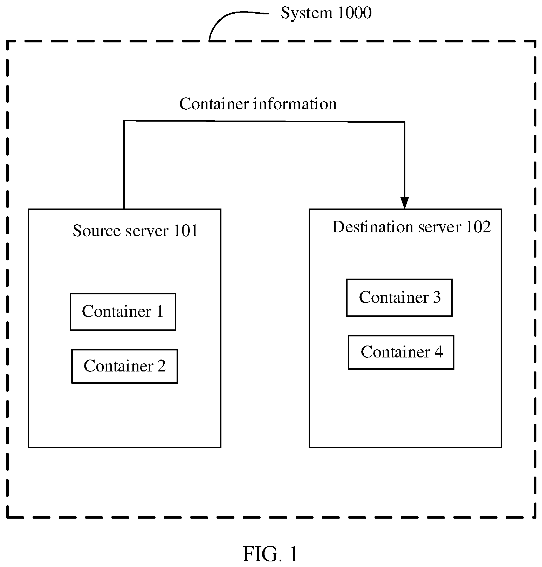

This solution may be applied to a system 1000 shown in FIG. 1. The system 1000 includes a source server 101 or a destination server 102. The source server 101 includes a container 1 and a container 2, and the destination server 102 includes a container 3 and a container 4.

Optionally, the source server 101 and the destination server 102 may include a virtual server, a physical server, a back-end server, a cloud server, a computing server, a routing server, a switching server, or the like.

Optionally, container information migration in this solution may be applied to a plurality of scenarios. For example, the container 1 is located in the source server 101, the container 3 is located in the destination server 102, and information in the container 1 is migrated to the container 3. In this case, the source server 101 and the destination server 102 may be located in a same device, or may be located not in a same device. This is not limited herein. For example, both the container 1 and the container 2 may be located in the source server. In this case, the information in the container 1 is migrated to the container 2.

The following describes, by using an example, a container cluster management platform on which embodiments of this application are based.

This solution may be applied to a container cluster management platform. On the container cluster management platform, a component that is actually responsible for running container instances in a container cluster is a node agent (Node Agent) component. The node agent component invokes a container engine (Container Engine) for interaction, and then invokes CRIU via the container engine. The following uses an example in which the container cluster management platform is Kubernetes (K8s). The Kubernetes includes a control layer, a scheduling layer, and an execution layer.

Optionally, the control layer includes: a Kubernetes application programming interface server (Kubernetes Application Programming Interface server, kube-apiserver), a Kubernetes controller (kube-controller), and a Kubernetes scheduler (kube-scheduler). The control layer is a control plane of Kubernetes. The control layer may design resource scheduling and execute container migration scheduling based on a Kubernetes custom resource definition (Custom Resource Definition, CRD).

Optionally, the scheduling layer includes: a migrate custom resource definition (migrate Custom Resource Definition, migrate CRD) and a migrate operator (migrate Operator). Tasks that may be executed by the scheduling layer include: The layer may define the container migrate CRD, and implement the container migrate operator. The scheduling layer may identify a container migration task sent by the execution layer.

Optionally, the execution layer includes: kubelet, container runtime (container runtime), and checkpoint/storage (checkpoint/restore in userspace, CRIU). kubelet is used for container lifecycle management. kubelet can deliver commands of starting and stopping and another command based on cluster information. The container runtime (container runtime) is software that implements an interface specification. kubelet can invoke the container engine, and then the container engine may start or stop a container. The container engine may also invoke the CRIU to specifically make the CRIU migrate a container, including functions of dumping container information on a source node, storing migrated container information on a destination node, and synchronizing a node container state to the execution layer, and other functions.

As shown in FIG. 1, during upgrading, maintenance, and load balancing of the source server 101, the source server needs to be restarted. Container information in the source server needs to be migrated to the destination server 102 through container migration. In addition, when server resource allocation is unbalanced, a resource ratio may also be adjusted through the container migration to ensure resource balancing. In a container migration process, the source server 101 serves as a transmitting end of container information that needs to be migrated, and the destination server 102 serves as a destination end to which the container information that needs to be migrated is to reach. In the destination server 102, a container of the destination server 102 needs to be restored based on the container information.

Because new information is generated in a container of the source server 101 in the migration process, the destination server 102 may migrate container information for a plurality of times, in other words, obtain the container information from the source server 101 for a plurality of times, and then restore the container of the destination server 102 based on the container information. When relationships between container information obtained at different moments are different, the destination server 102 cannot adjust a manner of restoring the container. As a result, a container restoration manner used by the destination server 102 may not match a relationship between the container information obtained at different moments, and a container migration effect is reduced.

Therefore, how the destination server adaptively adjusts a manner of restoring a container is a technical problem to be urgently resolved.

In addition, during container migration, because new data is generated in the container migration process, the container migration needs to be performed for a plurality of times after a 1^{st} time of migration ends, to migrate the newly generated data to the destination server 102. However, if the migration is performed for the plurality of times, migration duration may be excessively long. In addition, in a last migration process in the plurality of times of container migration, a corresponding process needs to be stopped to avoid generation of a memory dirty page. If stop duration is excessively long, user experience may be affected.

Therefore, how to avoid excessively long migration duration and excessively long stop duration in the container migration process is a technical problem to be urgently resolved.

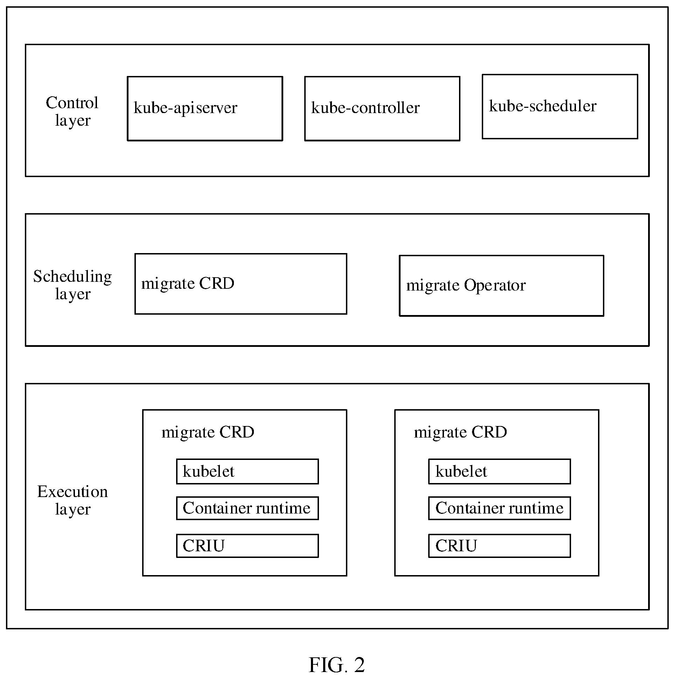

To resolve a problem that a destination server cannot adaptively adjust a manner of restoring a container, embodiments of this application provide an information restoration method 100. The method is applicable to the system shown in FIG. 1 and the container cluster management platform shown in FIG. 2. When the method is applied to the scenario shown in FIG. 1, the destination server may be the destination server 101 in FIG. 1, a first container may be the container 1 or the container 2 in the source server 101, and a second container may be the container 3 or the container 4 in the destination server 102, or may be the container 1 or the container 2 in the source server 101. When the method is applied to the container cluster management platform shown in FIG. 2, kubelet, a container engine, and CRIU may be disposed on the destination server. In the method 100, a manner of restoring container information is determined based on a relationship between a second VMA list and a third VMA list, so that when the relationship between the second VMA list and the third VMA list changes, the manner of restoring the container is adaptively adjusted, to achieve a better container migration effect.

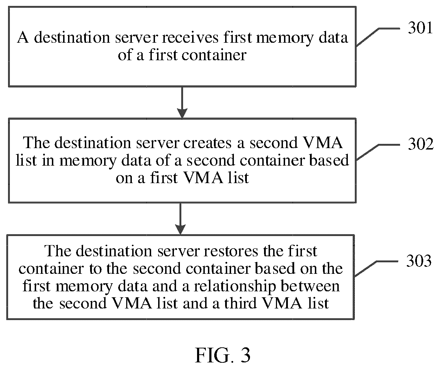

With reference to FIG. 3, the following specifically describes the method 100 provided in embodiments of this application. It needs to be noted that in FIG. 3, the method is illustrated by using an example in which the destination server is used as an execution body of interaction illustration. However, the execution body of the interaction illustration is not limited in this application. For example, an execution body of S301 to S303 in corresponding embodiments and

FIG. 3 is the destination server. Alternatively, the execution body may be a chip, a chip system, or a processor that supports the destination server in implementing the method, or may be a logical module or software that can implement all or some functions of the destination server. The destination server in S301 to S303 in the corresponding embodiments and FIG. 3 may also be replaced with a chip, a chip system, or a processor that supports the destination server in implementing the method, or may be replaced with a logical module or software that can implement all or some functions of a controller.

As shown in FIG. 3, the method 100 provided in embodiments of this application includes the following steps.

Step S301: The destination server receives first memory data of the first container.

It should be noted that the first memory data includes a first virtual memory address VMA list.

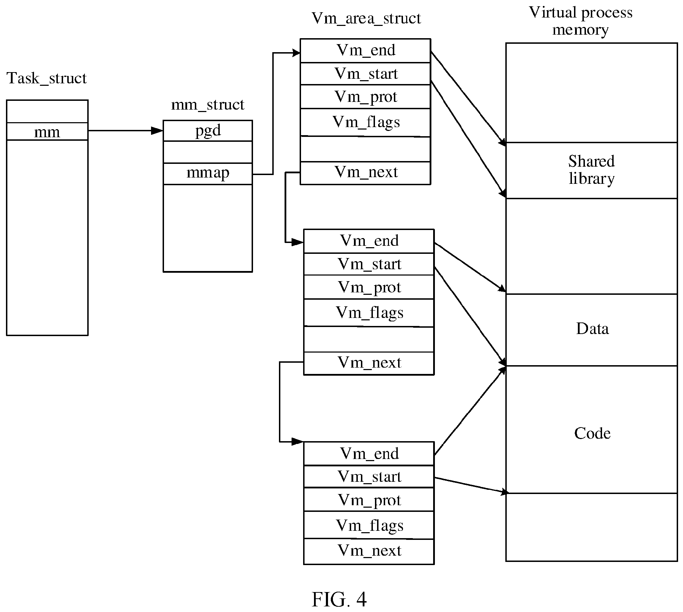

It should be noted that a VMA may also be referred to as a virtual memory area. FIG. 4 is used as an example. One VMA includes vm_start and vm_end, where vm_start is a start address of a virtual address area, and vm_end is an end address of the virtual address area. VMA_start and VMA_end may be mapped to a part of areas in a virtual memory of a process. In other words, the VMA may be used to identify a continuous memory range in the virtual memory of the process. For example, vm_start may be 0x08d83000, and vm_end may be 0x08d88000. In this case, the VMA is used to identify a memory range of 0x08d83000 to 0x08d88000 in the virtual memory of the process.

Optionally, the first VMA list indicates a mapping relationship between the first memory data and a physical memory of the first container.

Optionally, the first VMA list and a VMA in the first VMA list include: a private file mapping VMA or an anonymous private VMA.

Optionally, in addition to receiving the first memory data, the destination server further receives other container information of the first container, where the container information of the first container includes the first memory data or first process number information.

Optionally, processes in which the destination server receives the first memory data of the first container, creates a second VMA list, and restores the first container to the second container, and another process constitute current container migration. In a more specific design, the current container migration includes: A source server dumps the container information to an image file, where the container information includes the first memory data and the first process number information. The source server sends the image file to the destination server, and correspondingly, the destination server receives the image file. In this case, because the image file includes the first memory data, the destination server also receives the first memory data. The destination server creates the second VMA list in the second container based on the first VMA list in the first memory data. The destination server restores the first container to the second container based on the first memory data and a relationship between the second VMA list and a third VMA list.

Optionally, the source server may send the image file to the destination server in a shared storage manner.

Optionally, a plurality of times of container migration are sorted based on a time sequence of occurrence of the container migration, and an adjacent previous time of container migration is container migration whose occurrence time is before the current container migration and is closest to the current container migration. For example, based on the time sequence, in the plurality of times of container migration, if the current container migration is a 3^{rd} time of container migration, the adjacent previous time of container migration is a 2^{nd} time of container migration.

Optionally, a procedure of the adjacent previous time of container migration is the same as a procedure of the current container migration, but to-be-migrated container information is different. Container information of the adjacent previous time of container migration includes memory data and second process number information. The container information of the adjacent previous time of container migration is container information of the first container at a moment at which a previous time of dumping is performed, and container information of the current container migration is container information of the first container at a moment at which current dumping is performed. Correspondingly, memory data obtained at the adjacent previous time is memory data of the first container at the moment at which the previous time of dumping is performed.

Optionally, the container migration may be classified into full migration and incremental migration. When container migration is performed for a first time in the plurality of times of container migration, full migration may be performed, to be specific, all container information of the first container of the source server at a dumping moment is migrated to the destination server. Optionally, the adjacent previous time of container migration may be full migration. After the 1^{st} time of migration, incremental migration may be performed, to be specific, added container information at a current dumping moment in comparison with that at a previous dumping moment is migrated. Optionally, the current container migration may be incremental migration. Optionally, the adjacent previous time of container migration may alternatively be incremental migration.

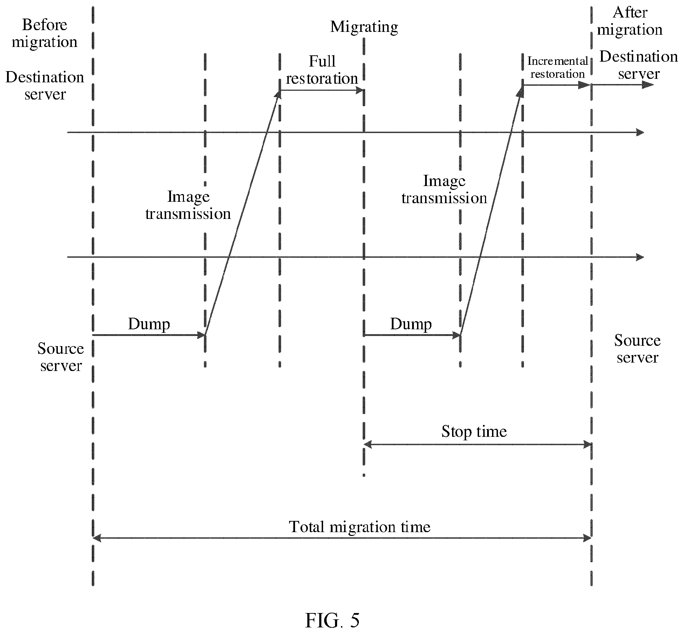

As shown in FIG. 5, a migration process on a left side of FIG. 5 is full migration. To be specific, the source server dumps all container information of the first container, and then transmits the dumped information to the destination server through imaging. Image transmission is to store all the container information to an image file, and then transmit the image file to the destination server. The source server then performs full restoration based on the received image file, and then after a plurality of times of incremental migration, the source server performs last container migration. Alternatively, the source server may directly perform last container migration after performing full migration. The migration process on the left side in FIG. 5 is the last container migration, to be specific, the source server dumps newly added container information of the first container at a current moment relative to that at a previous dumping moment, for example, an increment in memory data and an increment in process number information, and then, transmits the dumped information to the destination server through imaging, and the destination server performs incremental restoration based on the received image file. The incremental restoration is to restore the container information of the first container to the second container based on the received newly added container information.

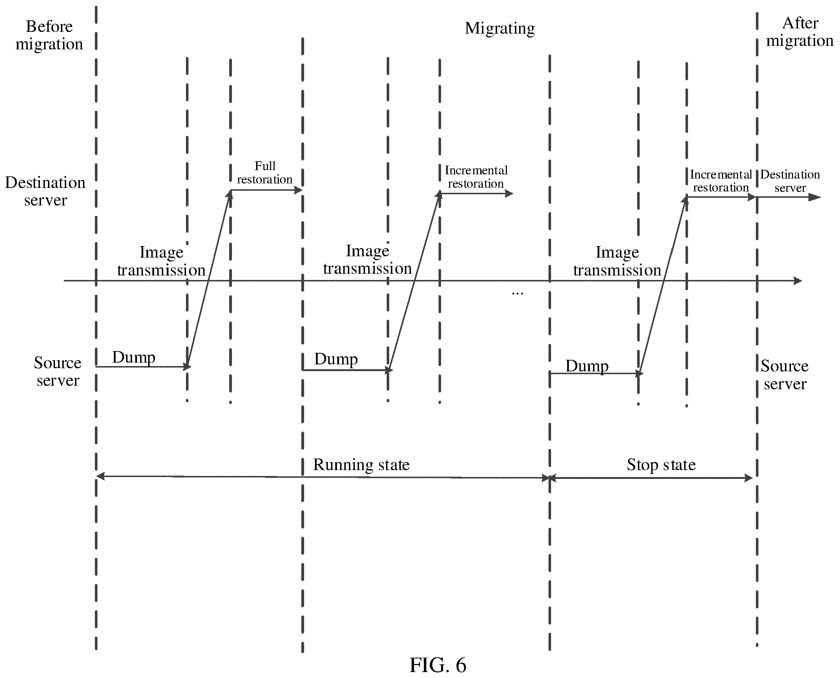

FIG. 6 is a diagram of a full migration process and a last incremental migration process. As shown in FIG. 6, before full migration and last incremental migration, a plurality of times of container incremental migration may be performed. Before last container migration is started, the source server is in a running state. When the last container migration is started, the source server is in a stop state.

In a specific design, the first VMA list indicates the mapping relationship between the first memory data and the physical memory of the first container.

Step S302: The destination server creates the second VMA list in memory data of the second container based on the first VMA list.

It should be noted that content of the second VMA list is the same as content of the first VMA list. When the destination server receives a VMA list of the first container, details are as follows:
Optionally, the destination server may create the second VMA list in an mmap manner based on the received first VMA list, where the mmap is a memory mapping method, and in this solution, the first VMA list may be mapped to a segment of virtual memory address in virtual address space of the destination server in the mmap manner, that is, the second VMA list is obtained.

Optionally, in a process of the adjacent previous time of container migration, the destination server receives the memory data, where the memory data includes the third VMA list, the destination server creates a fourth VMA list based on the third VMA list, and in a more specific design, the destination server may further restore the first container to the second container based on the first memory data and a relationship between the second VMA list and the fourth VMA list.

Step S303: The destination server restores the first container to the second container based on the first memory data and the relationship between the second VMA list and the third VMA list. It should be noted that the third VMA list is carried in memory data that is of the first container and that is received at the adjacent previous time.

Optionally, the destination server restores the first container to the second container based on the container information and the relationship between the second VMA list and the third VMA list.

Optionally, in step S303, the destination server restores the first container to the second container based on the container information of the first container, that is, a baseline for restoring information in the second container is the container information of the first container. Usually, in this restoration process, it needs to be ensured that last information in the second container includes the container information of the first container. The relationship between "the second VMA list and the third VMA list" also affects restoration of the information in the second container, and the relationship is mainly used by the destination server to determine a manner of restoring the information in the second container.

Optionally, in this solution, there may be two manners of determining the relationship between the second VMA list and the third VMA list. In a first manner, a VMA in the second VMA list is used as a baseline. For example, the second VMA list includes a first VMA. In this case, the third VMA list is traversed by using the first VMA as a baseline, to search for a VMA that has an intersection set and an inclusion relationship with the first VMA. In a second manner, a VMA in the second VMA list is used as a baseline. For example, the second VMA list includes a third VMA. In this case, the second VMA list is traversed by using the third VMA as a baseline, to search for a VMA that has an intersection set with the first VMA. A specific manner to be used is not limited in this solution. The two manners may be used separately or simultaneously. When the two manners are used simultaneously, the first manner may be used to determine whether first memory data corresponding to the first VMA is a memory dirty page that needs to be copied, and the second manner may be used to determine whether the third VMA needs to be released.

It should be noted that, for ease of description, the first VMA and the third VMA in the second VMA list, and a second VMA in the second VMA list are used as an example below, but in this solution, the second VMA list is not limited to including only the first VMA and the third VMA, and the relationship between the second VMA list and the third VMA list is not limited to being determined by using only the first VMA and the third VMA as a baseline. Similarly, the second VMA is also an example, and does not constitute a limitation on a determining process of determining the relationship between the second VMA list and the third VMA list. The following specifically describes several possibilities of a relationship between a VMA in the second VMA list and a VMA in the third VMA list.

A first relationship is that the first VMA in the second VMA list has no intersection set with the third VMA list, that is, there is a VMA that exists in a current VMA list and that has no intersection set with a previous VMA list. In a possible implementation, when the second VMA list includes the first VMA, and the first VMA has no intersection set with the third VMA list, the destination server copies second memory data to the memory data corresponding to the second container, where the second memory data is memory data that is in the first memory data and that corresponds to the first VMA.

It should be noted that the memory dirty page refers to added memory data of the first container at a moment at which the information in the first container is currently copied in comparison with that a moment at which the container information is copied at a previous time. For example, in a 1^{st} time of container migration, a server 1 copies information 1 in a container 1, and in a 2^{nd} time of container migration, the server 1 copies information 2 in a container 2. In this case, an increment in memory data in the information 2 in comparison with memory data in the information 1 is a memory dirty page. The memory dirty page may also be referred to as memory dirty data, a physical page dirty page, a dirty (dirty) page, or the like.

To help understand the foregoing implementation, for example, the first VMA is 0x08d83000 to 0x08d88000, and the third VMA list includes only two VMAs, that is, 0x08d81000 to 0x08d82000 and 0x08d89000 to 0x08d90000. In this case, both the two VMAs have no intersection set with the first VMA, and it may indicate that the first memory data corresponding to the first VMA is the memory dirty page.

It can be learned that, when any VMA in the third VMA list has no intersection set with the first VMA, it may be directly determined, based on a relationship between VMAs, that the first memory data is the memory dirty page. As described above, the first VMA is used as an example herein. **In** this solution, all VMAs that are in the second VMA list and that have no intersection set with any VMA in the third VMA list may be searched for, to quickly locate memory data that is a memory dirty page, and copy the memory dirty page to restore the memory data. Locating the memory dirty page is an important component of the incremental migration in the container migration. This solution shortens time for locating the memory dirty page in the memory data, and also shortens time for the container migration to some extent.

Optionally, the destination server may traverse the third VMA list by using the first VMA as a baseline, to determine whether a VMA that is the same as the first VMA exists in the third VMA list. When the VMA that is the same as the first VMA does not exist, the destination server may determine that the first memory data is the memory dirty page.

A second relationship is that a second VMA in the third VMA list has no intersection set with the second VMA list, that is, there is a VMA that exists in a previous VMA list and that has no intersection set with a current VMA list. In a possible implementation, when the third VMA list includes the second VMA, and the second VMA has no intersection set with the first VMA list, the destination server releases the second VMA.

Based on the foregoing technical solution, in comparison with a solution of determining, based on process related information, whether the memory data needs to be released, in this solution, whether the second VMA needs to be released can be quickly determined based on the relationship between the second VMA and the second VMA list. When the VMA is released, corresponding memory data is also released. In this manner, the VMA that needs to be released can be quickly found, to release memory data that is not currently required. For example, the released memory data may be memory data that is not currently received but is received at a previous time, and this type of memory data is the memory data that is not currently required.

Optionally, the destination server may traverse both the second VMA list and the third VMA list, to determine a VMA corresponding to memory data that is a memory increment in the second VMA list and a VMA that needs to be released in the third VMA list.

Optionally, the destination server may release the third VMA by using an munmap function.

A third relationship is that a third VMA in the second VMA list has an intersection set with the third VMA list, that is, there is a VMA that has an intersection set with a current VMA list and that has an intersection set with a previous VMA list. In a possible implementation, when the second VMA list includes the third VMA, and the third VMA has an intersection set with the third VMA list, the destination server establishes a mapping relationship between physical page information corresponding to the intersection set and the third VMA, where the physical page information is carried in the memory data that is of the first container and that is received at the adjacent previous time.

It should be noted that a physical page is a minimum unit in memory management of a Linux kernel. Specifically, a minimum unit of physical memory managed by a CPU is a page, and the Linux kernel uses a struct page (struct page) data structure to describe a physical page. The physical page information is a physical page or a part of the physical memory. The physical page information includes an identifier, and the identifier may indicate whether the memory data changes.

Based on the foregoing technical solution, when the first VMA includes the second VMA, in this solution, a relationship between previously obtained memory data and current memory data may be established by pre-mapping physical page information, that is, pre-mapping previously obtained physical page information. In other words, an index of the previously obtained memory data is currently established. Because the previously obtained memory data already exists in the destination server, the destination server may currently invoke the previously obtained memory data by establishing the index.

In a specific design, the destination server may establish, in an mremap manner, the mapping relationship between the physical page information corresponding to the intersection set and the third VMA.

In a possible implementation, the destination server determines, based on the physical page information, whether third memory data is a memory dirty page, where the third memory data is memory data that is in the first memory data and that corresponds to the third VMA. When the third memory data is the memory dirty page, the destination server copies the third memory data to the memory data corresponding to the second container.

Based on the foregoing technical solution, when the third VMA has an intersection set with the third VMA list, in this solution, based on VMA information, whether the memory data changes is further determined based on the physical page information, to determine whether the first memory data is the memory dirty page. This solution is applicable to a case in which a VMA part that is an intersection set remains unchanged, that is, a mapping relationship between the VMA part and a virtual memory remains unchanged, but stored memory data may change, to improve accuracy of determining the memory dirty page, and avoid a case in which the memory dirty page generated by the first container in the container migration process is not migrated to the second container.

Optionally, the physical page information includes a mark, where the mark indicates whether the memory data corresponding to the VMA changes, and the destination server may further determine, based on the mark, whether the first memory data is the memory dirty page.

It should be noted that a sequence of the two steps of pre-mapping the physical page information and determining whether the first memory data is the memory dirty page is not limited in this solution. For example, the destination server may first establish a relationship between all physical page information and the third VMA, and then determine, based on the physical page information, that the first memory data is the memory dirty page. Alternatively, the destination server may first determine, based on the physical page information, whether the first memory data is the memory dirty page and memory data that is in memory data included in the first memory data and that is the same as current memory data, and then establish a mapping relationship between physical page information corresponding to the same memory data and the third VMA.

It is assumed that a VMA that is in the third VMA list and that has an intersection with the third VMA is a fourth VMA. A case in which the third VMA in the second VMA list has an intersection set with the third VMA list may be further divided into the following cases.

Case 1: The third VMA includes the fourth VMA.

It may be understood that, the case in which the third VMA includes the fourth VMA includes: The third VMA is completely the same as the fourth VMA, or the fourth VMA is a proper subset of the third VMA. For the latter case, for example, the third VMA may be 0x08d83000 to 0x08d88000, and the fourth VMA may be 0x08d84000 to 0x08d86000.

This type of case in which the third VMA includes the fourth VMA may include: The third VMA is completely the same as the fourth VMA, and the third VMA is a superset of the fourth VMA. The case in which the third VMA is completely the same as the fourth VMA includes: The third VMA is a VMA that remains unchanged in twice migration, that is, a currently used VMA is the same as that used at a previous time, or the third VMA is a VMA on which the source server performs re-mmap in an original virtual address range by using an munmap function, that is, the third VMA and the fourth VMA share a same virtual address range.

For these cases, in other words, when the third VMA includes the fourth VMA, optionally, the destination server pre-maps all physical page information corresponding to the fourth VMA, that is, establishes a relationship between all the physical page information corresponding to the fourth VMA and the third VMA. The reason why all memory data is pre-mapped is that when the third VMA includes the fourth VMA, the memory data corresponding to the third VMA also includes all memory data corresponding to the fourth VMA. Therefore, the memory data currently received includes all the memory data corresponding to the fourth VMA, that is, all the memory data corresponding to the fourth VMA is still currently required. Therefore, all the physical page information needs to be pre-mapped.

Case 2: The third VMA does not include the fourth VMA.

Optionally, when the third VMA does not include the fourth VMA, the destination server determines that a sub VMA that overlaps the third VMA exists in the fourth VMA; and the destination server establishes a mapping relationship between the third VMA and physical page information corresponding to the sub VMA.

It may be understood that, a case in which the third VMA does not include the fourth VMA, but the third VMA has an intersection set with the fourth VMA includes: The third VMA does not include the fourth VMA, the fourth VMA does not include the third VMA, but the third VMA has an intersection set with the fourth VMA; or the third VMA does not include the fourth VMA, and the fourth VMA includes the third VMA. To help understand the foregoing implementation, for example, the third VMA may be 0x08d83000 to 0x08d88000, and the fourth VMA may be 0x08d81000 to 0x08d87000; or the third VMA may be 0x08d83000 to 0x08d88000, and the fourth VMA may be 0x08d81000 to 0x08d89000.

Based on the foregoing technical solution, physical page information corresponding to an overlapping VMA between a previous time of migration and current migration is mapped to the current VMA. Because memory data corresponding to the overlapping VMA is still required in a current container migration process, a relationship between overlapping memory data between previously obtained memory data and current memory data and the current memory data may be established in this manner, that is, an index of the overlapping memory data between the previously obtained memory data and the current memory data is currently established. Because the overlapping memory data already exists in the destination server, the destination server may currently invoke the previously obtained memory data by establishing the index.

It can be learned that, in this case, the destination server does not need to pre-map all physical page information to the third VMA, but may pre-map only a part of physical page information that corresponds to the corresponding overlapping VMA to the third VMA, so that a part of resources consumed due to pre-mapping can be saved.

In the foregoing solution, a process of restoring the memory data in the first memory data is described. In addition, optionally, in the current container restoration process, the process number information may be further restored. Specifically, assuming that process number information currently received is first process number information, and process number information received at a previous time is second process number information, the process number information may be restored in the following implementation.

Optionally, the destination server restores process number information of the second container based on a relationship between the first process number information and the second process number information.

Optionally, the destination server determines newly added process number information, reduced process number information, and unchanged process number information in the first process number information in comparison with that in the second process number information. For the newly added process number information, the process number information is copied. For the reduced process number information, that is, process number information that exists in the second process number information but does not exist in the first process number information, the process number information is deleted. For the unchanged process number information, process number information that is in the second process number information and that is the same as that in the first process number information is retained.

Optionally, after the first memory data or the second memory data is restored, the source server may determine, based on a method 200, whether a first condition is met, to determine whether to perform last container migration. For details, refer to the method 200. Details are not described herein again. It should be noted that when the method 200 is used for determining, the source server may be a third server in the method 200, and the destination server may be a destination server in the method 200.

To avoid excessively long migration duration and excessively long stop duration in a container migration process, embodiments of this application provide an information processing method 200. The information processing method 200 is applicable to the system shown in FIG. 1 and the container cluster management platform shown in FIG. 2. When the method is applied to the scenario shown in FIG. 1, a source server may be the source server 101, a third container may be the container 1 or the container 2 of the source server 101, and a destination server may be the destination server 102. When the method is applied to the container cluster management platform shown in FIG. 2, kubelet, a container engine, and CRIU may be disposed on the source server and the destination server. In the method 200, a constraint condition, namely, a first condition is introduced to control a moment at which last container migration is started, to control total migration duration, a dirty page rate, and stop duration, so as to avoid problems such as excessively long total migration duration, an excessively high dirty page rate, and excessively long stop duration, and optimize user experience in a container migration process.

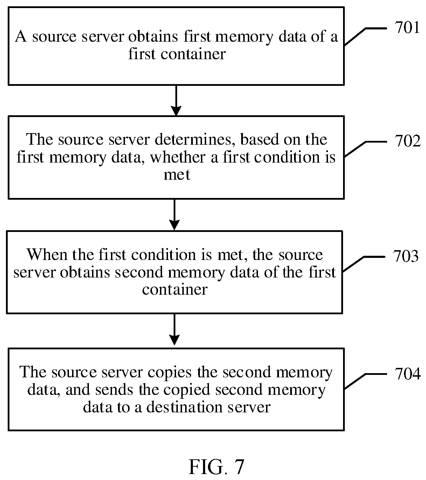

With reference to FIG. 7, the following specifically describes the method 200 provided in embodiments of this application. It needs to be noted that in FIG. 7, the method is illustrated by using an example in which the source server is used as execution body of interaction illustration. However, the execution body of the interaction illustration is not limited in this application. For example, an execution body of S701 to S704 in corresponding embodiments and FIG. 7 is the source server. Alternatively, the execution body may be a chip, a chip system, or a processor that supports the source server in implementing the method, or may be a logical module or software that can implement all or some functions of the source server. The source server in S701 to S704 in the corresponding embodiments and FIG. 7 may also be replaced with a chip, a chip system, or a processor that supports the source server in implementing the method, or may be replaced with a logical module or software that can implement all or some functions of a controller.

As shown in FIG. 7, the method 200 provided in embodiments of this application includes the following steps.

Step S701: The source server obtains first memory data of a first container.

Optionally, after the source server obtains the first memory data of the first container, the source server copies the first memory data, and transmits the copied first memory data to the destination server, so that the destination server restores the first container to a second container based on the first memory data.

Optionally, the destination server may process the first memory data by using the method 100. For example, the first memory data includes a first VMA list, the destination server creates a second VMA list in memory data of the second container based on the first VMA list, memory data received by the destination server at an adjacent previous time includes a third VMA list, and the destination server may restore the first container to the second container based on a relationship between the third VMA list and the second VMA list. For details, refer to the method 100. Details are not described herein again. Optionally, when the method 100 is used to restore container information, the destination server in the method 200 may be the same as the destination server in the method 100, and the destination server in the method 200 may be not the same as the destination server in the method 100.

Step S702: The source server determines, based on the first memory data, whether the first condition is met.

It should be noted that the first condition includes a total migration duration constraint, a dirty page rate constraint, or a stop duration constraint.

Optionally, the first condition may be configured by default at delivery, or may be set by a user based on a requirement. For example, constraints that may be set by the user include: Total migration duration is less than 1s, a dirty page rate is less than 2%, and stop duration is less than 0.5s.

In a possible implementation of the second aspect, the source server obtains third memory data of the first container at a current moment. That the source server determines, based on the first memory data, whether the first condition is met includes: The source server determines, based on a relationship between the first memory data and the third memory data, whether the first condition is met.

It should be noted that, after obtaining the first memory data, the source server copies the first memory data to an image file. The source server obtains the third memory data only after the source server transmits the image file to the destination server. It can be learned that there is a time difference between obtaining time of the third memory data and obtaining time of the first memory data. In the time difference, the first container may generate new data in a running process. Therefore, the third memory data is not necessarily completely the same as the first memory data. In this case, the total migration duration, the dirty page rate, and the stop duration may be estimated based on the relationship between the third memory data and the first memory data, to determine whether the predicted data meets the first condition.

For how the source server determines, based on the relationship between the first memory data and the third memory data, whether the first condition is met, the following implementation may be used.

In a possible implementation, the first memory data includes the third memory data, and the third memory data includes fourth memory data; the source server determines a memory dirty page of the fourth memory data relative to the third memory data; and the source server determines, based on the memory dirty page, whether the first condition is met.

It may be understood that, as described above, there is the time difference between the obtaining time of the third memory data and the obtaining time of the first memory data. **In** the time difference, the first container may generate a memory dirty page in the running process, and the memory dirty page needs to be migrated to the destination server. A size of the memory dirty page is a decisive factor that affects container migration time. Therefore, stop time is equal to time of last container migration. Therefore, the memory dirty page of the fourth memory data relative to the third memory data needs to be determined, so that migration time, stop time, or the like that needs to be spent in an entire container migration process if the last container migration is started at a current moment can be predicted to some extent based on the memory dirty page. The last migration refers to container migration in which a process needs to be stopped. Whether the first condition is met may be determined based on the prediction, to determine whether the current moment is suitable for performing the last migration.

The following describes a manner in which the source server determines whether the first condition is met when the first conditions are different constraints.

In a possible implementation, the first condition is the total migration duration constraint, and the source server determines, based on the size of the memory dirty page, first duration that needs to be consumed for migrating the memory dirty page; the source server uses a sum of duration that has been consumed for lively migrating information in the first container to the destination server and the first duration as first total migration duration; and the source server determines whether the first total migration duration meets the total migration duration constraint.

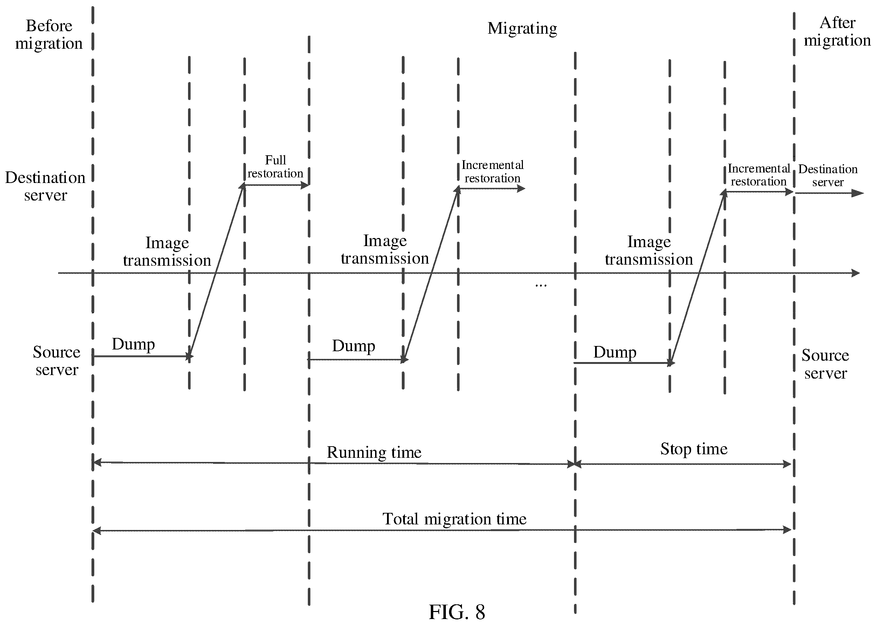

As shown in FIG. 8, the total migration duration is equal to a sum of time consumed in all container migration processes between the first container and the second container. The duration of the last container migration may be predicted based on the size of the memory dirty page. In this case, a sum of the duration of the last container migration and duration consumed due to previously performed container migration needs to be calculated, to obtain the total migration duration. In FIG. 8, before the last container migration, a plurality of times of incremental migration and one time of full migration are performed, so that the total migration duration = duration of the incremental migration that has been performed + duration of the full migration + the predicted first duration required for the last container migration.

Based on the foregoing technical solution, the source server uses a sum of the predicted duration that needs to be consumed for migrating the memory dirty page and the duration that has been consumed for the container migration as the first total migration duration, and determines whether the first total migration duration meets the total migration duration constraint. Therefore, when a requirement of the user is that the total migration duration cannot be excessively long, the last container migration may be started in time when the migration duration approaches the total migration duration constraint that is set by the user, to ensure that the total migration duration is controllable.

In another possible implementation, the first condition is the stop duration constraint, and the source server determines, based on the size of the memory dirty page, first duration that needs to be consumed for migrating the memory dirty page; the source server uses the first duration as first stop duration; and the source server determines whether the first stop duration meets the stop duration constraint.

As shown in FIG. 8, stop time is equal to time required for the last container migration. In this case, the time required for the last container migration may be estimated based on the size of the memory dirty page, that is, the first duration that needs to be consumed for migrating the memory dirty page is estimated, to obtain the stop duration.

Based on the foregoing technical solution, the source server uses the predicted duration that needs to be consumed for migrating the memory dirty page as the stop duration, to estimate the stop duration. Therefore, when a requirement of the user is that the stop duration cannot be excessively long, the last container migration may be started only when the stop duration approaches the stop duration constraint that is set by the user. This can avoid a problem of excessively long stop duration caused by an excessively large memory dirty page in the last migration, shorten the stop duration, and improve user experience.

In another possible implementation, the first condition is the dirty page rate, and the source server uses a ratio of the size of the memory dirty page to a size of the memory data in the first memory data as a first dirty page rate; and the source server determines whether the first dirty page rate meets the dirty page rate constraint.

Based on the foregoing technical solution, when the dirty page rate is higher, a proportion of memory dirty pages that need to be migrated is higher, and correspondingly, the stop duration is longer. The dirty page rate constraint is introduced, to avoid a problem of excessively long stop duration. In addition, because the stop duration needs to be predicted, an error may exist in the prediction, and the dirty page rate may be introduced to evaluate the stop time to some extent, the dirty page rate may be introduced to improve accuracy of evaluation of the stop duration to some extent.

Step S703: When the first condition is met, the source server obtains second memory data of the first container.

It should be noted that, the second memory data includes: second process number information corresponding to a first process or fourth memory data corresponding to the first process.

It should be noted that obtaining of the second memory data in step S703 and step S704 are processes in the last container migration, that is, the last container migration is performed only after the first condition is met.

Step S704: The source server copies the second memory data, and sends the copied second memory data to the destination server.

It should be noted that, the second memory data includes the first VMA list, the first process is in a stop state in the copying process and the sending process, and the first process is a process in which the first memory data is generated.

Optionally, the destination server receives the second memory data, and restores the destination server based on the second memory data. In this restoration process, the destination server is in a suspended state. Optionally, when a process in which the destination server restores the container based on the second memory data is completed, the destination server may start a process.

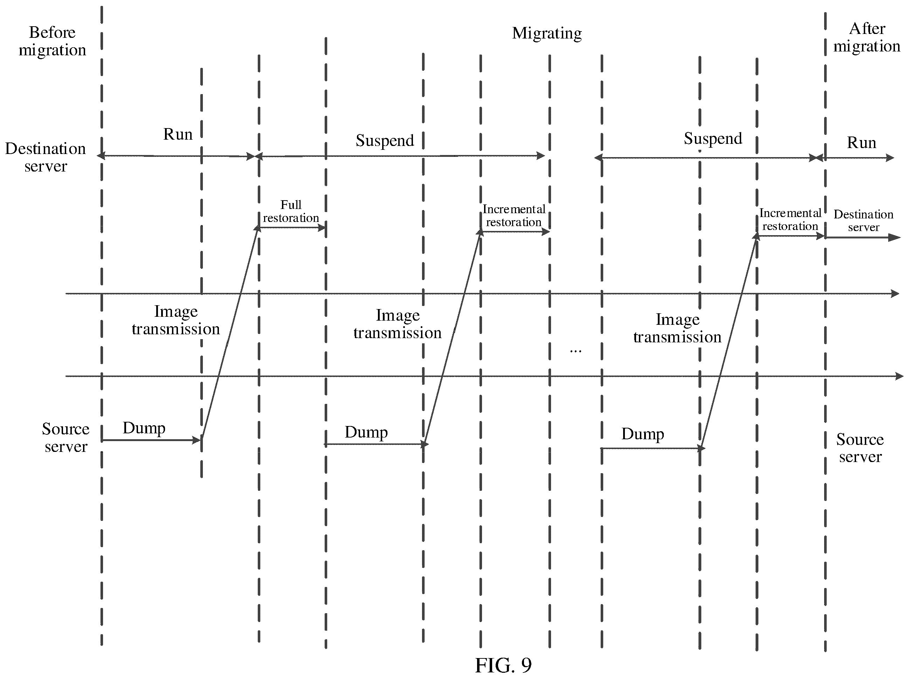

As shown in FIG. 9, when the destination server does not start full restoration, the process of the destination server is in a running state; when the destination server starts to perform full restoration until an end moment of the last container migration, the process of the destination server is in the suspended state; and after the last container migration ends, the process of the destination server is restarted; in this case, the process of the destination server is in the running state.

In the solution shown in FIG. 7, the first condition is introduced, and whether the first condition is met is determined based on the first memory data. The last container migration is performed only when the condition is met, that is, the second memory data is migrated. In the last container migration process, the process is in the stop state. There is an associative relationship between a moment at which the last container migration is started and the total migration duration. For example, when the moment at which the last container migration is started is earlier, a quantity of times of the container migration is smaller, and correspondingly, the total migration duration is shorter. Therefore, the total migration duration of the container migration process may be controlled by controlling the moment at which the last container migration is performed. When the moment at which the last container migration is started is earlier, the dirty page rate of the memory data is lower because a quantity of container information iterations is smaller. It can be learned that the dirty page rate may be controlled by controlling the moment at which the last container migration is performed. When the moment at which the last container migration is started is earlier, a quantity of container information iterations is smaller, and correspondingly, the dirty page rate of the memory data is higher. Therefore, the dirty page rate may be controlled by controlling the moment at which the last container migration is performed. When the moment at which the last container migration is started is earlier, a quantity of container information iterations is smaller, and a size of the memory dirty page of the memory data is larger. Correspondingly, in the last migration process, a time for restoring the memory dirty page is longer, and a stop moment is equal to a moment at which the last migration is performed. Therefore, the stop moment may be controlled by controlling the moment at which the last container migration is performed. In this solution, a constraint condition, namely, the first condition is introduced to control the moment at which the last container migration is started, to control the total migration duration, the dirty page rate, and the stop duration, so as to avoid problems such as excessively long total migration duration, an excessively high dirty page rate, and excessively long stop duration, and optimize user experience in the container migration process.

The following describes the methods shown in FIG. 3 and FIG. 7 by using examples with reference to specific instances.

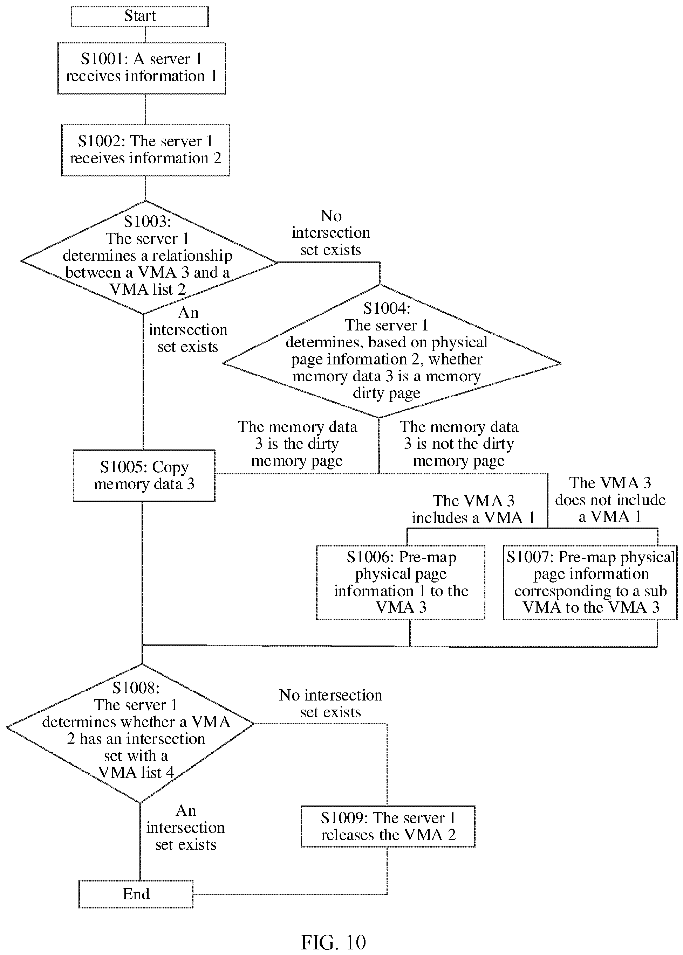

An embodiment is an example of the method 100. This embodiment is an example in which the destination server in the method 100 is a server 1. In this embodiment, one container migration process is described by using an example. However, the embodiment in FIG. 10 is not limited to being executed only once in this solution. This embodiment in FIG. 10 may be executed for a plurality of times, that is, container migration is performed for a plurality of times based on the solution in FIG. 10.

FIG. 10 is a schematic flowchart of an embodiment. A specific procedure in FIG. 10 includes the following steps.

Step S1001: The server 1 receives information 1.

Optionally, the information 1 may be sent by a server 2. The server 2 dumps container information, and stores the container information in an image file 1. The image file 1 is the information 1. The server 2 sends the information 1 to the server 1.

Optionally, the information 1 includes memory data and process number information. The memory data includes memory data 1, memory data 2, and a VMA list 1, and the memory data 1 includes physical page information 1.

Optionally, the server 1 creates a VMA list 2 based on the VMA list 1 by using an mmap function. The VMA list 2 includes a VMA 1 and a VMA2. The VMA 1 corresponds to the memory data 1, and the VMA 2 corresponds to the memory data 2.

Step S1002: The server 1 receives information 2.

Optionally, the information 1 may be sent by the server 2. The server 2 dumps container information again, and stores the container information in an image file 2. The image file is the information 2. The server 2 sends the information 1 to the server 1.

Optionally, the information 2 includes the memory data 2 and the process number information, and the memory data 2 includes a VMA list 3 and physical page information 2.

Optionally, the server 1 creates a VMA list 4 based on the VMA list 3 by using the mmap function. The VMA list 4 includes a VMA 3. The VMA 3 corresponds to memory data 3.

Step S1003: The server 1 determines a relationship between the VMA 3 and the VMA list 2.

Specifically, when the VMA 3 has no intersection set with the VMA list 2, step S1005 is performed; or when the VMA 3 has an intersection set with the VMA list 2, step S1004 is performed.

Step S1004: The server 1 determines, based on the physical page information 2, whether the memory data 3 is a memory dirty page.

For example, the server 1 may determine, based on an identifier in the physical page information 2, whether the memory data 3 changes, to determine whether the memory data 3 is the memory dirty page.

When the memory data 3 is the memory dirty page, step S1005 is performed. It is assumed that a VMA that has an intersection set with the VM 3 in the VMA list 4 is the VMA 1. When the memory data 3 is not the memory dirty page and the VMA 3 includes the VMA 1, step S1006 is performed. When the memory data 3 is the memory dirty page and the VMA 3 does not include the VMA 1, step S1007 is performed.

Step S1005: The server 1 copies the memory data 3.

Step S1006: The server 1 pre-maps the physical page information 1 to the VMA 3.

For example, the server 1 may establish a relationship between the VMA 3 and the physical page information 1 by using an mremap function by using the destination server.

Step S1007: The server 1 pre-maps physical page information corresponding to a sub VMA to the VMA 3.

It should be noted that the sub VMA is a VMA part that is an intersection set between the VMA 1 and the VM 3.

Optionally, if other VMAs than the VMA 3 exist in the VMA list 4, a relationship between the other VMAs and the VMA list 2 is determined with reference to step S1003 to step S1007, and corresponding container information is restored. During execution, the entire VMA list 4 may be traversed at a time, to determine a relationship between each VMA in the VMA list 4 and the VMA list 2.

Step S1008: The server 1 determines whether the VMA 2 has an intersection set with the VMA list 4.

When the VMA 2 has an intersection set with the VMA list 4, the procedure ends, or a next time of container migration may be started, or the method 200 is used to determine whether a current moment is suitable for performing last container migration, and if the current moment is suitable for performing last container migration, the last container migration in the step is performed.

When the VMA 2 has no intersection set with the VMA list 4, step S1009 is performed.

Step S1009: The server 1 releases the VMA 2.

It may be understood that after the VMA 2 is released, the memory data 2 is also released.

Another embodiment is an example of the method 200. This embodiment is an example in which the source server in the method 200 is a server 2. This embodiment is an example in which a first condition includes total migration duration, stop duration, and a dirty page rate.

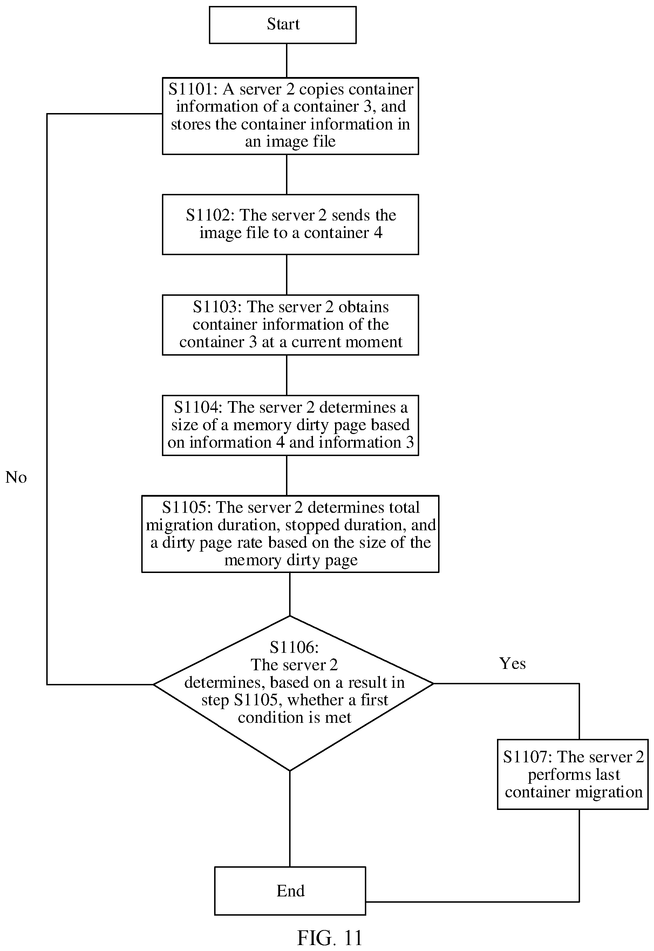

FIG. 11 is a schematic flowchart of an embodiment. A specific procedure in FIG. 11 includes the following steps.

Step S1101: The server 2 copies container information of a container 3, and stores the container information in an image file.

Optionally, step S1101 may belong to a full migration process, and the container information of the container 3 in step S1101 is all container information of the container 3 at a copying moment. Step S1101 may belong to an incremental migration process. In this case, the container information of the container 3 in step S1101 is added container information of the container 3 at a copying moment relative to that at a previous copying moment.

Step S1102: The server 2 sends the image file to a container 4.

Step S1103: The server 2 obtains container information of the container 3 at a current moment.

The container 4 is located in a device 3, and the current moment usually refers to a moment at which the device 3 completes container restoration on the container 4 based on information in the image file.

Step S1104: The server 2 determines a size of a memory dirty page based on information 4 and information 3.

Optionally, the size of the memory dirty page is memory data that is added in the memory data in the information 4 relative to memory data in the information 3.

Step S1105: The server 2 determines the total migration duration, the stop duration, and the dirty page rate based on the size of the memory dirty page.

Optionally, the total migration time is equal to a sum of time consumed in all container migration processes between the server 2 and the device 3. Duration of last container migration may be predicted based on the size of the memory dirty page. In this case, a sum of the duration of the last container migration and duration consumed due to previously performed container migration needs to be calculated, to obtain the total migration duration.

Optionally, the source server calculates, based on the size of the memory dirty page, duration that needs to be consumed for migrating the memory dirty page, to obtain the stop duration.

Optionally, the dirty page rate is a ratio of the size of the memory dirty page to a size of copied memory data in previously performed container migration.

Step S1106: The server 2 determines, based on a result in step S1105, whether the first condition is met.

When it is determined, based on the result in step S1105, that the first condition is met, step S1107 is performed; or when the first condition is not met, step S1101 is performed.

Step S1107: The server 2 performs last container migration.

The foregoing describes embodiments of this application from a perspective of the methods. The following describes communication apparatuses in embodiments of this application from a perspective of specific apparatus implementations.

The foregoing describes embodiments of this application from a perspective of the methods. The following describes communication apparatuses in embodiments of this application from a perspective of specific apparatus implementations.

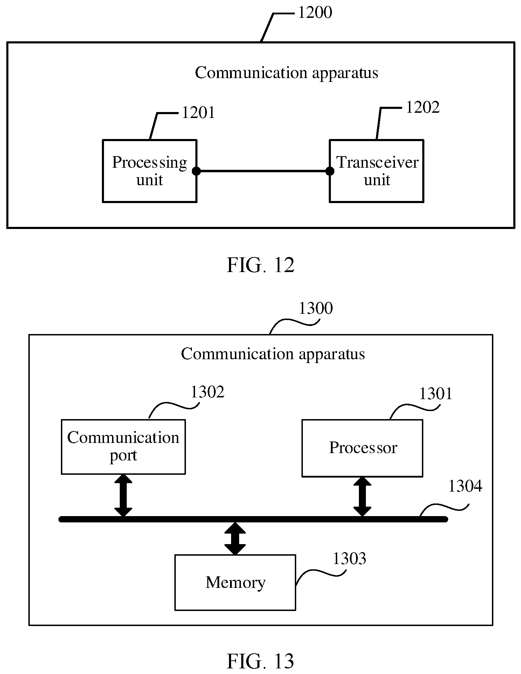

FIG. 12 is a diagram of a communication apparatus 1200 according to an embodiment of this application. The communication apparatus 1200 includes at least a processing unit 1201 and a transceiver unit 1202.

In an example, the communication apparatus 1200 may implement a function of the destination server in the foregoing method 100, and therefore may also implement beneficial effects of the foregoing method 100.

Specifically, when the method in the first aspect is performed, the transceiver unit 1202 is configured to receive first memory data of a first container, where the first memory data includes a first virtual memory address VMA list; and the destination server creates a second VMA list in memory data of a second container based on the first VMA list, where content of the second VMA list is the same as content of the first VMA list. The processing unit 1201 is configured to restore the first container to the second container based on the first memory data and a relationship between the second VMA list and a third VMA list, where the third VMA list is carried in memory data that is of the first container and that is received at an adjacent previous time.

In a possible implementation, the processing unit 1201 is specifically configured to restore the first container to the second container by the destination server based on the first memory data and depending on whether the second VMA list has an intersection set with the third VMA list.

In a possible implementation, the processing unit 1201 is specifically configured to: when the second VMA list includes the first VMA, and the first VMA has no intersection set with the third VMA list, copy second memory data to memory data corresponding to the second container, where the second memory data is memory data that is in the first memory data and that corresponds to the first VMA.

In a possible implementation, the processing unit 1201 is specifically configured to: when the third VMA list includes a second VMA, and the second VMA has no intersection set with the first VMA list, release the second VMA.

In a possible implementation, the processing unit 1201 is specifically configured to: when the second VMA list includes the third VMA, and the third VMA has an intersection set with the third VMA list, establish a mapping relationship between physical page information corresponding to the intersection set and the third VMA, where the physical page information is carried in the memory data that is of the first container and that is received at an adjacent previous time.

In a possible implementation, the processing unit 1201 is specifically configured to: determine whether third memory data is a memory dirty page based on the physical page information, where the third memory data is memory data that is in the first memory data and that corresponds to the third VMA; and when the third memory data is the memory dirty page, copy the third memory data to the memory data corresponding to the second container.

In an example, the communication apparatus 1200 may implement a function of the source server in the foregoing method 200, and therefore can also implement beneficial effects of the foregoing method 200.

Specifically, the transceiver unit 1202 is configured to obtain first memory data of a first container. The processing unit 1201 is configured to determine, based on the first memory data, whether a first condition is met, where the first condition includes a total migration duration constraint, a dirty page rate constraint, or a stop duration constraint. When the first condition is met, the transceiver unit 1202 is further configured to obtain the second memory data of the first container. The processing unit 1201 is further configured to copy the second memory data, and send the copied second memory data to a destination server, where the second memory data includes the first VMA list, a first process is in a stop state in the copying process and the sending process, and the first process is a process in which the first memory data is generated.

In a possible implementation, the transceiver unit 1202 is further configured to: obtain third memory data of the first container at a current moment; and invoke the processing unit 1201 to determine, based on a relationship between the first memory data and the third memory data, whether the first condition is met.

In a possible implementation, the processing unit 1201 is further configured to: determine a memory dirty page of the third memory data relative to the first memory data; and determine, based on the memory dirty page, whether the first condition is met.

FIG. 13 is a diagram of a structure of a communication apparatus in the foregoing embodiments according to an embodiment of this application. The communication apparatus may be specifically the destination server or the source server in the foregoing embodiments. For a structure of the communication apparatus, refer to the structure shown in FIG. 13.

The communication apparatus includes at least one processor 1301, at least one communication port 1302, at least one memory 1303, and one or more antennas 1304. The processor 1301 and the memory 1303 are connected to the communication port 1302 through, for example, a bus. In this embodiment of this application, the connection may include various types of interfaces, transmission lines, buses, or the like. This is not limited in this embodiment. The antenna 1304 is connected to the communication port 1302.

As an implementation example, in a case in which the communication apparatus shown in FIG. 13 is the destination server in the foregoing FIG. 3 and related embodiments, the communication port 1302 is configured to receive first memory data of a first container, where the first memory data includes a first virtual memory address VMA list; and the destination server creates a second VMA list in memory data of a second container based on the first VMA list, where content of the second VMA list is the same as content of the first VMA list. The processor 1301 is configured to restore the first container to the second container based on the first memory data and a relationship between the second VMA list and a third VMA list, where the third VMA list is carried in memory data that is of the first container and that is received at an adjacent previous time.

In an implementation example, when the communication apparatus shown in FIG. 13 is the source server in the foregoing FIG. 7 and related embodiments, the communication port 1302 is configured to obtain first memory data of a first container. The processor 1301 is configured to determine, based on the first memory data, whether a first condition is met, where the first condition includes a total migration duration constraint, a dirty page rate constraint, or a stop duration constraint. When the first condition is met, the communication port 1302 is further configured to obtain the second memory data of the first container. The processor 1301 is further configured to copy the second memory data, and send the copied second memory data to a destination server, where the second memory data includes the first VMA list, a first process is in a stop state in the copying process and the sending process, and the first process is a process in which the first memory data is generated.

It should be noted that, for details about an execution process of each component in the communication apparatus shown in FIG. 13, refer to the descriptions in the foregoing method embodiments of this application. Details are not described herein again.

The processor 1301 is mainly configured to: process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data, and the central processing unit is mainly configured to control the entire destination server or source server, execute the software program, and process the data of the software program. The processor 1301 in FIG. 13 may integrate functions of the baseband processor and the central processing unit. A person skilled in the art may understand that the baseband processor and the central processing unit may alternatively be independent processors, and are interconnected by using a technology like a bus. A person skilled in the art may understand that the destination server or the source server may include a plurality of baseband processors to adapt to different network standards, and the destination server or the source server may include a plurality of central processing units to enhance a processing capability of the destination server or the source server. All the components of the destination server or the source server may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1303 may exist independently, and is connected to the processor 1301. Optionally, the memory 1303 may be integrated with the processor 1301, for example, integrated on a chip. The memory 1303 can store program code for performing the technical solutions in embodiments of this application, and the processor 1301 controls execution. Various types of executed computer program code may also be considered as drivers of the processor 1301.

FIG. 13 shows only one memory and one processor. In an actual destination server or source server, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The communication port 1302 may be configured to support receiving or sending of a radio frequency signal between the communication apparatus and a terminal, and the communication port 1302 may be connected to the antenna 1304. The communication port 1302 includes a transmitter Tx and a receiver Rx. Specifically, the one or more antennas 1304 may receive a radio frequency signal. The receiver Rx in the communication port 1302 is configured to: receive the radio frequency signal from the antenna, convert the radio frequency signal into a digital baseband signal or a digital intermediate frequency signal, and provide the digital baseband signal or the digital intermediate frequency signal for the processor 1301, so that the processor 1301 further processes the digital baseband signal or the digital intermediate frequency signal, for example, performs demodulation processing and decoding processing. In addition, the transmitter Tx in the communication port 1302 is further configured to: receive a modulated digital baseband signal or digital intermediate frequency signal from the processor 1301, convert the modulated digital baseband signal or digital intermediate frequency signal into a radio frequency signal, and send the radio frequency signal through the one or more antennas 1304. Specifically, the receiver Rx may selectively perform one or more levels of down-mixing processing and analog-to-digital conversion processing on the radio frequency signal to obtain the digital baseband signal or the digital medium-frequency signal. A sequence of the down-mixing processing and the analog-to-digital conversion processing is adjustable. The transmitter Tx may selectively perform one or more levels of up-mixing processing and digital-to-analog conversion processing on the modulated digital baseband signal or digital medium-frequency signal to obtain the radio frequency signal. A sequence of the up-mixing processing and the digital-to-analog conversion processing is adjustable. The digital baseband signal and the digital medium-frequency signal may be collectively referred to as a digital signal.

The transceiver may also be referred to as a transceiver unit, a transceiver machine, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. That is, the transceiver unit includes the receiving unit and the sending unit. The receiving unit may also be referred to as a receiver, an input port, a receiving circuit, or the like. The sending unit may be referred to as a transmitter, a transmitter machine, a transmitting circuit, or the like.

It should be noted that the communication apparatus shown in FIG. 13 may be specifically configured to implement steps implemented by the destination server or the source server in any one of the foregoing method embodiments, and implement technical effects corresponding to the destination server or the source server. For a specific implementation of the communication apparatus shown in FIG. 13, refer to the description in any one of the foregoing method embodiments. Details are not described herein again.

An embodiment of this application further provides a computer-readable storage medium storing one or more computer-executable instructions. When the computer-executable instructions are executed by a processor, the processor performs the method described in the possible implementations of the communication apparatus in the foregoing embodiments. The communication apparatus may be specifically the destination server or the source server in the foregoing embodiments.

An embodiment of this application further provides a computer program product (or referred to as a computer program) that stores one or more computers. When the computer program product is executed by the processor, the processor performs the method in the possible implementations of the communication apparatus. The communication apparatus may be specifically the destination server or the source server in the foregoing embodiments.

An embodiment of this application further provides a chip system, and the chip system includes a processor, configured to support a communication apparatus in implementing the functions in the possible implementations of the communication apparatus. In a possible design, the chip system may further include a memory. The memory is configured to store program instructions and data that are necessary for the communication apparatus. The chip system may include a chip, or may include a chip and another discrete device. The communication apparatus may be specifically the destination server or the source server in the foregoing embodiments.

An embodiment of this application further provides a communication system. The communication system includes the destination server and the source server.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit 1201, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on this understanding, a part that essentially contributes to the technical solutions of this application or all or a part of the technical solutions may be embodied in a form of a software product. The computer software product is stored in a storage medium, and includes several instructions for enabling a computer device (which may be a personal computer, a server, a destination server, source server, or the like) to perform all or a part of steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical characteristics thereof. However, these modifications or replacements do not make essence of the corresponding technical solutions depart from the scope of the technical solutions in embodiments of this application.

## Claims

1. An information restoration method, wherein the method comprises:
receiving first memory data of a first container, wherein the first memory data comprises a first virtual memory address; VMA list;
creating a second VMA list in memory data of a second container based on the first VMA list, wherein content of the second VMA list is the same as content of the first VMA list; and
restoring the first container to the second container based on the first memory data and a relationship between the second VMA list and a third VMA list, wherein the third VMA list is carried in memory data that is of the first container and that is received at an adjacent previous time.

2. The information restoration method according to claim 1, wherein the restoring the first container to the second container based on the first memory data and a relationship between the second VMA list and a third VMA list comprises:
restoring the first container to the second container based on the first memory data and depending on whether the second VMA list has an intersection set with the third VMA list.

3. The information restoration method according to claim 2, wherein the restoring the first container to the second container based on the first memory data and depending on whether the second VMA list has an intersection set with the third VMA list comprises:
when the second VMA list comprises a first VMA, and the first VMA has no intersection set with the third VMA list, copying second memory data to the memory data corresponding to the second container, wherein the second memory data is memory data that is in the first memory data and that corresponds to the first VMA.

4. The information restoration method according to claim 2, wherein the restoring the first container to the second container based on the first memory data and depending on whether the second VMA list has an intersection set with the third VMA list comprises:
when the third VMA list comprises a second VMA, and the second VMA has no intersection set with the second VMA list, releasing the second VMA.

5. The information restoration method according to claim 2, wherein the restoring the first container to the second container based on the first memory data and depending on whether the second VMA list has an intersection set with the third VMA list comprises:
when the second VMA list comprises a third VMA, and the third VMA has an intersection set with the third VMA list, establishing a mapping relationship between physical page information corresponding to the intersection set and the third VMA, wherein the physical page information is carried in the memory data that is of the first container and that is received at the adjacent previous time.

6. The information restoration method according to claim 5, wherein after the establishing a mapping relationship between physical page information corresponding to the intersection set and the third VMA, the method further comprises:
determining, based on the physical page information, whether a third memory data is a memory dirty page, wherein the third memory data is memory data that is in the first memory data and that corresponds to the third VMA; and
when the third memory data is the memory dirty page, copying the third memory data to the memory data corresponding to the second container.

7. An information processing system, comprising a source server and a destination server, wherein
the source server obtains first memory data of a first container;
the source server determines, based on the first memory data, whether a first condition is met, wherein the first condition comprises a total migration duration constraint, a dirty page rate constraint, or a stop duration constraint;
when the first condition is met, the source server obtains second memory data of the first container;
the source server copies the second memory data, and sends the copied second memory data to the destination server, wherein the second memory data comprises a first VMA list, a first process is in a stop state in a copying process and a sending process, and the first process is a process in which the first memory data is generated;
the destination server creates a second VMA list in memory data of a second container based on the first VMA list, wherein content of the second VMA list is the same as content of the first VMA list; and
the destination server restores the first container to the second container based on the second memory data and a relationship between the second VMA list and a third VMA list, wherein the third VMA list is carried in memory data that is of the first container and that is received at an adjacent previous time.

8. The information processing system according to claim 7, wherein after the source server obtains the first memory data of the first container:
the source server obtains third memory data of the first container at a current moment; and
that the source server determines, based on the first memory data, whether a first condition is met comprises:
the source server determines, based on a relationship between the first memory data and the third memory data, whether the first condition is met.

9. The information processing system according to claim 8, wherein that the source server determines, based on a relationship between the first memory data and the third memory data, whether the first condition is met comprises:
the source server determines a memory dirty page of the third memory data relative to the first memory data; and
the source server determines, based on the memory dirty page, whether the first condition is met.

10. A communication apparatus, comprising a communication interface and a processor, wherein
the communication interface is configured to receive or send an external communication signal, and send the received communication signal to the processor; and
the processor is configured to perform the method according to any one of claims 1 to 6.

11. A communication apparatus, comprising:
a transceiver unit, configured to perform a receiving and sending operation in the method according to any one of claims 1 to 6; and
a processing unit, configured to perform an operation other than the receiving and sending operation in the method according to any one of claims 1 to 6.

12. A computer program product, comprising instructions, wherein when the instructions are run on a processor, the method according to any one of claims 1 to 6 is performed.

13. A chip, comprising at least one processing unit and an interface circuit, wherein the interface circuit is configured to provide program instructions or data for the at least one processing unit, and the at least one processing unit is configured to execute the program instructions to implement the method according to any one of claims 1 to 6.
